# EUROPEAN PATENT SPECIFICATION

(11) **EP 3 371 522 B1**
(45) Date of publication and mention of the grant of the patent: **04.03.2020**
(21) Application number: 16790565.2
(22) Date of filing: 28.10.2016
(51) Int. Cl.: F24S 10/50, F24S 10/80, F24S 70/60

(54) **TRANSPIRED SOLAR COLLECTOR**
DURCHLÄSSIGER SONNENKOLLEKTOR
COLLECTEUR SOLAIRE TRANSPIRANT

(30) Priority: 06.11.2015 WO PCT/EP2015/020221
(43) Date of publication of application: 12.09.2018
(73) Proprietor: Tata Steel IJmuiden B.V., 1951 JZ Velsen-Noord (NL)
(72) Inventor: WIP, Erik Petrus Johan, 1970 CA Ijmuiden (NL); JENTINK, Christiaan, 1970 CA Ijmuiden (NL)
(74) Representative: Group Intellectual Property Services
(86) International application number: PCT/EP2016/076109
(87) International publication number: WO 2017/076773

(56) References cited:
- CN-U- 201 637 145
- DE-A1-102009 011 318
- FR-A1- 2 399 629
- FR-A1- 2 535 444
- US-A- 4 201 195
- US-A- 4 267 822
- US-A- 4 534 337
- US-A1- 2009 084 521

## Description

### Field of the invention

The invention relates to a transpired solar collector wherein outside air is heated by drawing outside air into the collector and leading the air through the collector. The heated outside air is subsequently used for purposes requiring heat such as interior heating, industrial processes and agricultural processes such as drying of goods and storing of products.

### Background of the invention

A transpired solar collector comprises an absorber plate provided with multiple perforations wherein the absorber is part of an enclosure forming an air collector space. By providing a negative pressure in the collector space outside air is drawn through the perforations into the collector space. The negative pressure is often realized with a ventilation system, wherein the ventilation system is connected to the collector space by means of a duct. The heated air is led through this duct to the interior of a building for heating purposes or to processing equipment.

Transpired solar collectors are in most cases mounted on an outside wall of a building, on a roof of a building or both in a position that as much solar radiation is captured as possible. The wall or roof of the building may form part of the collector space if the wall or roof is suitable for that purpose, which in the first place means that it has to be sufficient insulated to prevent temperature losses.

Transpired solar collectors according to the prior art are very efficient when it comes to heating air at high approach velocities, which according to literature are velocities over 0.02 m/s. The approach velocity is the speed with which outside air passes through the perforations in the absorber plate into the collector space. At high approach velocities large volumes of air pass through the perforations in the absorber plate of the transpired solar collector. With high approach velocities the efficiency is high meaning that much of the solar energy absorbed in the absorber plate is transferred to the outside air passing through the absorber plate. However, because of the large velocity and consequently the large volumes of air there is only a relatively small increase in the temperature of the outside air.

A prior art transpired solar collector is known from document CN 201637145 wherein an undulated absorber plate provided with multiple perforations and a flat back plate define a collector space.

At lower approach velocities and therefore at lower air volumes the outside air passing through the perforations in the absorber plate could be heated to higher temperatures. However, the efficiency of transpired solar collectors rapidly decreases at lower approach velocities, wherein the decrease in efficiency is exponentially or about exponentially with respect to the efficiency at higher approach velocities. This is because much of the heating of the air drawn into the collector space takes place at the outside of the absorber plate and for that reason is wind-sensitive. At lower approach velocities the influence of the wind is far larger than at high approach velocities. This practically limits the application of known transpired solar collectors to circumstances where the user is satisfied with a limited increase in temperature.

### Objectives of the invention

It is an objective of the present invention to provide a transpired solar collector wherein air is heated to higher temperatures.

It is an objective of the present invention to provide a transpired solar collector with an improved heat exchange at low approach velocities.

It is another objective of the present invention to provide a transpired solar collector wherein the heat transfer inside the transpired solar collector is increased considerably.

It is another objective of the present invention to provide a transpired solar collector which can be manufactured using standard profiled metal plates and/or panels.

It is another objective of the present invention to provide a transpired solar collector which can be manufactured easily and at low costs.

### Description of the invention

The invention relates to a transpired solar collector as defined in claims 1 - 8 and a transpired solar collector system as defined in claims 9 - 11.

With conventional transpired solar collectors the areas immediately around the perforations on the exterior of the absorber plate heat up outside air before it is drawn through the perforations. The largest heat gain of the outside air comes from these surrounding areas. A further part of the total heat gain is provided by the edges of the perforations, which heat up the air when passing through the perforations. Finally, there is a small contribution to the total heat gain from the interior side of the absorber plate.

With high approach velocities, that is the speed with which the air approaches and passes through the perforations of the absorber plate, the known transpired solar collectors are very efficient and the performance is hardly dependent on any effect of the wind. However, with low approach velocities, the boundary layer of air outside the collector is easily disrupted and with these low approach velocities the known transpired solar collectors are much less efficient.

One or more of the objectives of the invention are realized by providing a transpired solar collector comprising an absorber plate provided with multiple perforations and a back plate, wherein the absorber plate and the back plate define a collector space, wherein outside air enters the collector space through the perforations and wherein the collector space is provided with at least one air outlet, wherein both the absorber plate and the back plate are profiled, wherein the profile comprises one or more troughs and ridges and wherein the longitudinal direction of the troughs and ridges of both the absorber plate and the back plate is at an angle to the general direction of the air flow in the collector space.

Because of the increased surface area the contact of the incoming air with the transpired solar collector inside the collector space is prolonged resulting in an increased heat transfer. The longitudinal direction of the troughs and ridges of both the absorber plate and the back plate is at an angle to the general direction of the air flow in the collector space. As a result of the varying cross-sectional area of the collector space in the general direction of the air flow the velocity of the air flow will be high where the cross-sectional area is small and low where the cross-sectional area is large. At the location with lower air flow velocities the residence time of the air is longer resulting in an increased air temperature.

At the transition from small to large cross-sectional area and vice versa the air will respectively be compressed and expanded resulting in turbulence in the air flow within the collector space. Because of the turbulent air laminar flow along the absorber plate is prevented which in turn results in mixing of the air by means of which heated air is directed away from the absorber plate and air of lower temperature is coming into contact with the absorber plate. Instead of that the temperature of part of the air is further increased through contact with the collector space side of the absorber plate all the air or almost all of the air inside the collector space is further heated through contact with the absorber plate. This is an important advantage over the prior art, see for instance US4899728, wherein the air flow is laminar. By providing that both the absorber plate and back plate are profiled has its effect on the flow of the air in the collector space by means of which the time of the air inside the collector space will be further increased and the contact of the air with the absorber plate will also be further increased.

It is further provided that the profile of at least one of absorber plate and back plate is rectangular or trapezoidal in transverse cross-section. The use of profiled plates result in a turbulent air flow inside the collector space which is further enhanced by using a rectangular or trapezoidal profile because of the sharp transitions between successive planes of the profile. In order to generate as much turbulence as possible and at the same time prevent that air might be trapped in the troughs of such a trapezoidal profiled absorber plate and/or back plate the angle of the trapezoidal profiled absorber plate and/or back plate is in the range of >90-140°, preferably in the range of 105-135°. For the avoidance of doubt this is the angle between successive planes of the profile.

The troughs and ridges of the absorber plate and the back plate form a number of channels which dependent on the orientation with respect to each other has influence on the air flow in the collector space and therewith the turbulence of the air flow and as a result the heat exchange between the transpired solar collector and the air. The general air flow induced in the collector space by ventilation means or the like depends on the position of these means with respect to the collector space. With parallel troughs and ridges of the absorber plate and back plate, according to the invention, turbulence and contact of the air with the absorber plate and back plate will be optimal if the general air flow in the collector space is transverse to the troughs and ridges of both the absorber plate and back plate.

According to a further aspect it is provided that the absorber plate and back plate are mounted against each other. The direct mounting of the absorber plate against the back plate results in that heat will be conducted from the absorber plate to the back plate, which further increases the heat transfer to the air inside the collector space. A further advantage of mounting absorber plate and back plate against each other is that the construction and mounting of the transpired solar collector becomes very easy.

By providing that the absorber plate and/or back plate comprise one or more profiled metal panels, for which a choice can be made from a wide range of profiled metal panels available in the industry, the construction and mounting of the transpired becomes even more cost-effective.

If the back plate is to be mounted against a non-insulated part of a wall or a roof it is provided that the back plate is formed by one or more insulated composite profiled panels. These composite profiled panels have an internal insulation layer of for instance a foam material which if off sufficient thickness will easily give the desired degree of insulation.

Further a transpired solar collector system is provided comprising a transpired solar collector as described above, a duct connected to the air outlet of the transpired solar collector and means connected to the duct to provide a negative pressure in the duct and the collector space, wherein the air outlet is provided along at least part of the length of a side of the transpired solar collector.

Preferably the air outlet is provided at a side of the transpired solar collector at the end of the troughs with the largest cross-sectional area.

A connecting channel is provided in order to connect the air outlet with the duct wherein the connecting channel has a first connection to connect to the air outlet of the transpired solar collector and a second connection to connect to the duct. Such a connecting channel is a transition part between the air outlet formed at the side of the transpired solar collector by the absorber plate and back plate and a duct of for instance circular, square or rectangular cross-section.

In a further embodiment a connecting channel is provided to connect at least two transpired solar collectors to the duct. With transpired solar collectors with the air outlet at the side of the collector such a connecting channel is mounted between two transpired solar collectors to guide the heated air of both collectors through the same duct.

### Brief description of the drawings

The invention will be further explained on hand of the drawing, in which:
- Fig.1: shows a cross- section of a known transpired solar collector,
- Fig.2: shows a cross- section of a transpired solar collector with profiled absorber plate and back plate according to the invention,
- Fig.3: shows a transpired solar collector in perspective with profiled absorber plate and back plate with parallel troughs and ridges according to the invention,
- Fig.4a-c: shows a transpired solar collector, not covered by the invention, in perspective with a profiled absorber plate and a single channel in a supporting structure as back plate and cross-sections transverse and parallel to the troughs and ridges,
- Fig.5a-c: shows a transpired solar collector, not covered by the invention, in perspective with profiled absorber plate and back plate with transverse troughs and ridges, wherein the troughs in the absorber plate form horizontal channels and cross-sections transverse and parallel to the troughs and ridges, and
- Fig.6a-c: shows a transpired solar collector, not covered by the invention, in perspective with profiled absorber plate and back plate with transverse troughs and ridges, wherein the troughs in the back and absorber plate form horizontal channels and cross-sections transverse and parallel to the troughs and ridges.

### Detailed description of the drawings

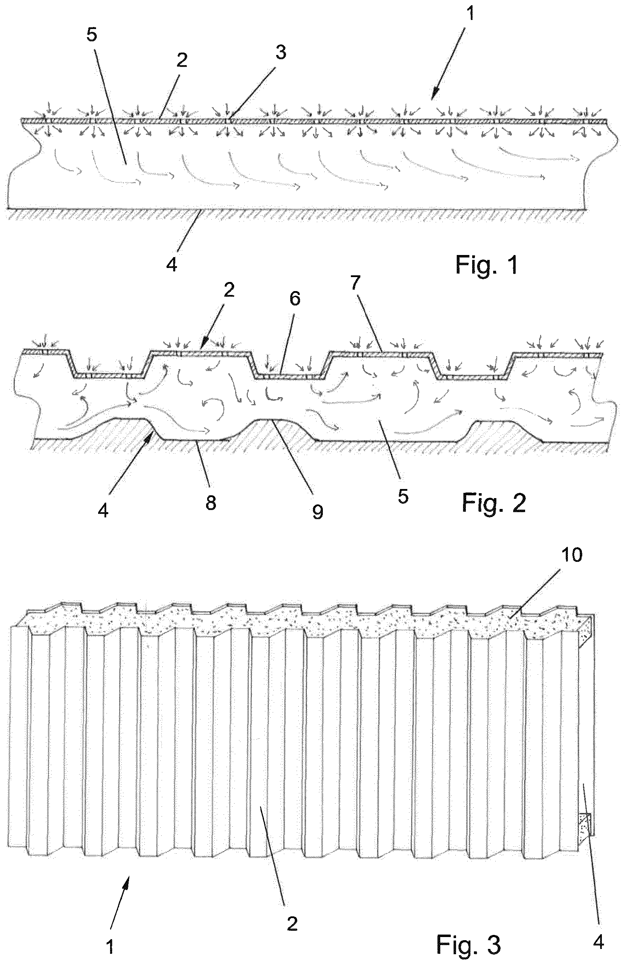

Fig.1 shows a cross- section of a known transpired solar collector 1 with an absorber plate 2, provided with perforations 3, and a back plate 4. By applying a negative pressure in the collector space, outside air is drawn through perforations 3 in the collector space 5. Applying such a negative pressure is for instance accomplished by means of a ventilator in a duct connected to the air outlet of the transpired solar collector. The difference between the pressure inside the collector space 5 and outside atmospheric pressure is such that the outside air is drawn into the collector space with a high approach velocity. Because of the high approach velocity the outside wind conditions cause little or no disturbance in the air flow resulting in a high efficiency, that is much of the solar energy is transferred to the air drawn into the collector space. Although the efficiency of such a known transpired solar collector is high the temperature increase of the air is only limited because of the large volume of air drawn into the collector space per unit of time.

Fig.2 shows a cross-section of a transpired solar collector 1 with profiled absorber plate 2 and back plate 4, wherein the troughs and ridges 6,7 of absorber plate 2 and the troughs and ridges 8,9 of back plate 4 run parallel to each other. Back plate 4 is formed in the supporting structure of the transpired solar collector 1 such as a wall of a building.

The air drawn into the collector space 5 through the perforations 3 is guided by means of the negative pressure in a direction transverse to the troughs and ridges to outside the collector space where the heated air is needed. By guiding the air through the channel along these troughs and ridges 6-9, that is through sections with successive narrow and wide sections, results in higher and lower air velocities and in turn turbulence and vortices in the air. As a result the time during which the air is guided from perforation 3 to the air outlet of the transpired solar collector increases as well as the contact of the air with the interior side of the absorber plate 2, resulting in an increased temperature of the air leaving the collector space. This temperature is further increased by using a limited negative pressure inside the collector space, resulting in a lower approach velocity and a longer travel time of the air through the collector space. Although the lower approach velocity may result in disturbance of the air drawn into the transpired collector limiting the efficiency, the overall result is that the air leaving the collector space is heated to a higher temperature than realised with the known transpired solar collectors. The increase in temperature makes this transpired solar collector technically and economically more suitable for processes that require higher temperature increases, such as room heating.

Fig.3 shows schematically a view in perspective of a transpired solar collector 1 as in fig.2 with the difference that the back plate 4 in this embodiment is made from a profiled sheet material, for instance a metal profiled sheet material. Since the collector space should be a closed space except for the outlet for the heated air, filler material 10 is provided where necessary along the sides of the collector space 5, in the figure only shown for the top and bottom sides. Instead of or in combination with this filler material closure caps can be provided or the rims of the absorber plate 3 and the back plate can be profiled in order to provide an airtight closure of the collector space.

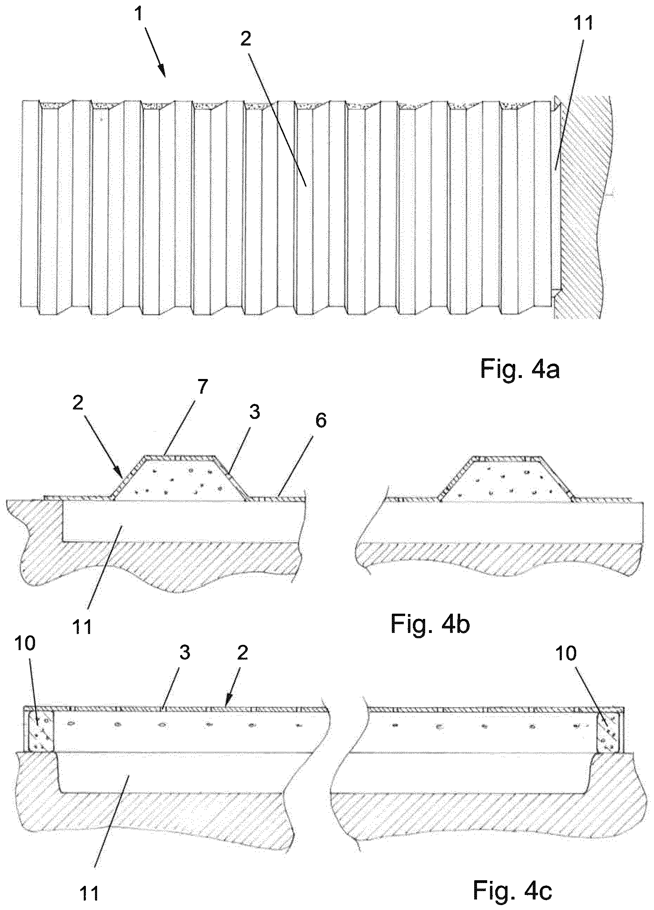

Fig.4a shows a transpired solar collector 1 in perspective with a profiled absorber plate 2 and a single channel 11 in a supporting structure for the profiled absorber plate 2, such as the wall of a building. The single channel 11 functions as a back plate. Fig.4b shows a transverse cross-section with the air outlet of the collector space at the right hand side in the figure. Fig.4c shows a cross-section through a ridge 7 parallel to the troughs and ridges 6,7 in the absorber plate 2.

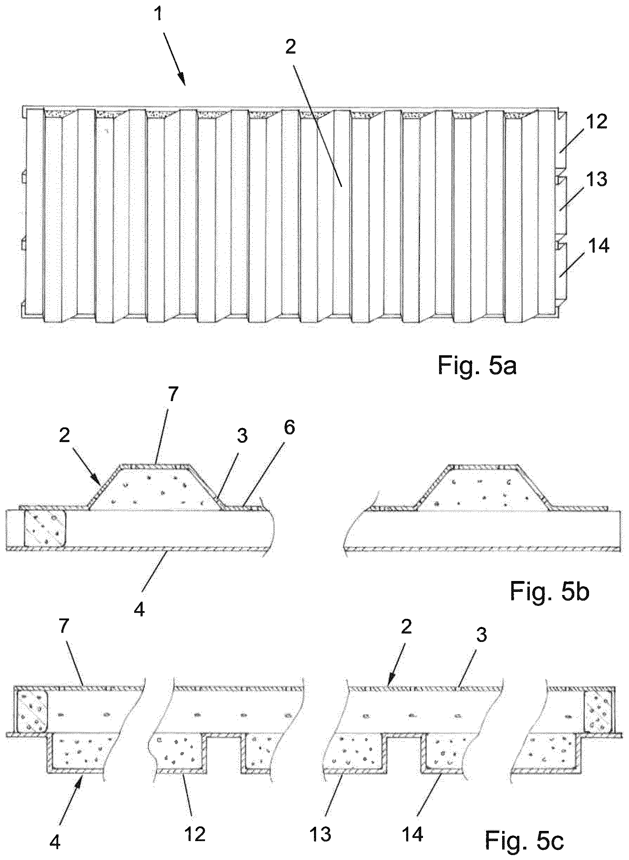

Fig.5a shows a transpired solar collector 1 in perspective with profiled absorber plate 2 and back plate 4 wherein the troughs and ridges 6-9 of absorber plate 2 and back plate 4 run transverse to each other. The back plate 4 is provided with three parallel channels 12,13,14. These about horizontal channels 12,13,14 have exit openings at the right hand side of the figure, as is also visible in the transverse cross-section according to fig.5b. Fig.5c shows a cross-section transverse to the channels 12,13,14.

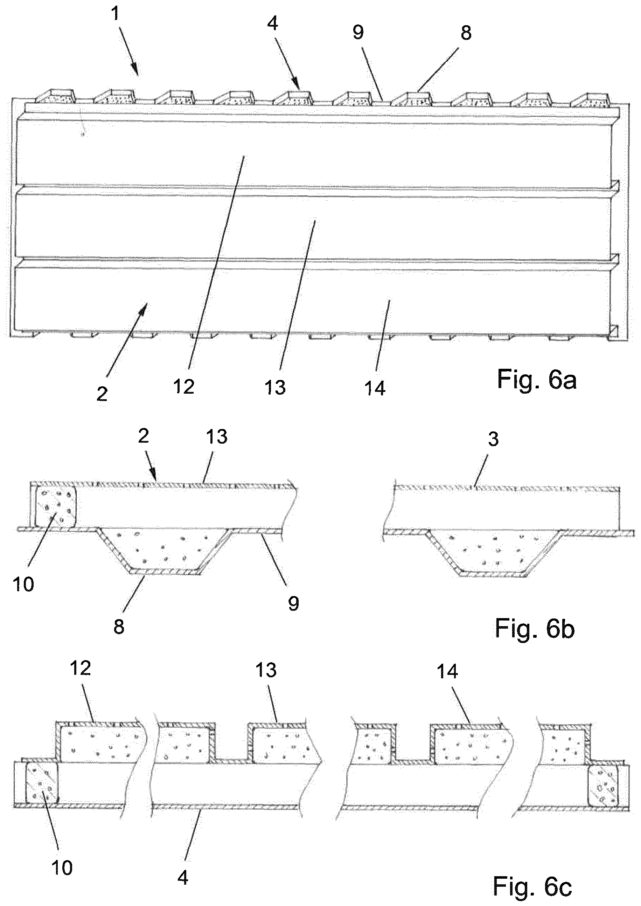

Fig.6a-c show a transpired solar collector 1 in perspective similar to the one shown in fig.5a-c with the difference that the channels 12,13,14 are now in the absorber plate 2 and that the back plate 4 has troughs and ridges 8,9 running in an about vertical direction.

The transpired solar collector 1 according to fig.5 and fig.6 has a construction wherein the absorber plate 2 and the back plate 4 are mounted against each other. With absorber plate 2 and the back plate 4 both made from a heat conducting material, for example profiled metal plates part of the heat of the absorber plate 2 is conducted to the back plate 4, which is beneficial for the heat exchange with the air inside the collector space 5.

The length of a trough or channel is preferably in the range of 2-12 meters, more preferably in the range of 4-9 meters.

Another important dimension is the ratio between the depth of the troughs of the absorber plate and the depth of the troughs of the back plate which are in the range of 1:1 - 1:3 preferably 1:1 - 1:2. If the depth of the troughs is too large this will result in dead zones with stagnant air resulting in a reduced heat exchange, if the channels are too deep relative to the transverse ridges, then the turbulence generation becomes weak and hence for the heating effect insignificant. The given depth ratio of the troughs is most effective with the absorber plate and back plate mounted against each other.

The performance of the transpired solar collector according to the invention has been measured and compared to existing transpired solar collectors. At a low approach velocity of 0,014 m/s a collector according to the invention has an efficiency of -60%, resulting in measured temperature increases of 32°C.

Transpired solar collector according to known technology have an efficiency of -45% as documented in "Solar air systems - a design handbook" of the Solar heating and cooling executive committee of the International Energy Agency, Editors: S. Robert Hastings, Ove Mørck, James & James Science publishers ltd, London UK, 2000.

## Claims

1. Transpired solar collector (1) comprising an absorber plate (2) provided with multiple perforations (3) and a back plate (4), wherein the absorber plate (2) and the back plate (4) define a collector space (5), wherein outside air enters the collector space (5) through the perforations (3) and wherein the collector space (5) is provided with at least one air outlet, **characterised in that** both the absorber plate (2) and back plate (3) are profiled, wherein the profile comprises one or more troughs (6, 8) and ridges (7, 9) and wherein the longitudinal direction of the troughs (6, 8) and ridges (7, 9) of both the absorber plate (2) and back plate (4) is at an angle to the general direction of the air flow in the collector space (5) and wherein the longitudinal direction of the troughs (6, 8) and ridges (7, 9) of the absorber plate (2) and the back plate (4) run parallel to each other.

2. Transpired solar collector according to claim 1, wherein the profile of at least one of absorber plate and back plate is rectangular or trapezoidal in transverse cross-section.

3. Transpired solar collector according to claims 1 or 2, wherein the distance between successive ridges (7, 9) is different for absorber plate (2) and back plate (4).

4. Transpired solar collector according to any of the preceding claims, wherein the length of a trough is preferably in the range of 2-12 meters, more preferably in the range of 4-9 meters .

5. Transpired solar collector according to any of the preceding claims, wherein the ratio between the depth of the troughs of the absorber plate and the depth of the troughs of the back plate are in the range of 1:1 - 1:3, preferably 1:1 - 1:2.

6. Transpired solar collector according to any of the preceding claims, wherein the absorber plate and back plate are mounted against each other.

7. Transpired solar collector according to any of the preceding claims, wherein the absorber plate and/or back plate comprise one or more profiled metal panels.

8. Transpired solar collector according to any of the preceding claims, wherein the back plate is formed by one or more insulated composite profiled panels.

9. Transpired solar collector system comprising a transpired solar collector according to any of the preceding claims, a duct connected to the air outlet of the transpired solar collector and means connected to the duct to provide a negative pressure in the duct and the collector space, wherein the air outlet is provided along at least part of the length of a side of the transpired solar collector.

10. Transpired solar collector system according to claim 9, wherein the air outlet is provided at a side of the transpired solar collector at the end of the troughs with the largest cross-sectional area.

11. Transpired solar collector system according to claim 9 or 10, wherein a connecting channel is provided to connect at least two transpired solar collectors to the duct.

## Patentansprüche

1. Durchlässiger Sonnenkollektor (1), umfassend eine Absorberplatte (2), die mit mehreren Perforationen (3) versehen ist, und eine Rückplatte (4), wobei die Absorberplatte (2) und die Rückplatte (4) einen Kollektorraum (5) definieren, wobei Außenluft durch die Perforationen (3) in den Kollektorraum (5) eintritt, und wobei der Kollektorraum (5) mit mindestens einem Luftauslass versehen ist, **dadurch gekennzeichnet, dass** sowohl die Absorberplatte (2) als auch die Rückplatte (4) profiliert sind, wobei das Profil eine oder mehrere Rinnen (6, 8) und Grate (7, 9) umfasst und wobei die Längsrichtung der Rinnen (6, 8) und Grate (7, 9) sowohl der Absorberplatte (2) als auch der Rückplatte (4) in einem Winkel zur allgemeinen Richtung des Luftstroms im Kollektorraum (5) ist und wobei die Längsrichtung der Rinnen (6, 8) und Grate (7, 9) der Absorberplatte (2) und der Rückplatte (4) parallel zueinander verlaufen.

2. Durchlässiger Sonnenkollektor nach Anspruch 1, wobei das Profil mindestens einer der Absorberplatte und der Rückplatte im Querschnitt rechtwinklig oder trapezförmig ist.

3. Durchlässiger Sonnenkollektor nach Ansprüchen 1 oder 2, wobei der Abstand zwischen aufeinanderfolgenden Graten (7, 9) für die Absorberplatte (2) und die Rückplatte (4) unterschiedlich ist.

4. Durchlässiger Sonnenkollektor nach einem der vorangehenden Ansprüche, wobei die Länge einer Rinne vorzugsweise im Bereich von 2 bis 12 Metern, weiter bevorzugt im Bereich von 4 bis 9 Metern ist.

5. Durchlässiger Sonnenkollektor nach einem der vorangehenden Ansprüche, wobei das Verhältnis zwischen der Tiefe der Rinnen der Absorberplatte und der Tiefe der Rinnen der Rückplatte im Bereich von 1:1 bis 1:3, vorzugsweise 1:1 bis 1:2 ist.

6. Durchlässiger Sonnenkollektor nach einem der vorangehenden Ansprüche, wobei die Absorberplatte und die Rückplatte gegeneinander montiert sind.

7. Durchlässiger Sonnenkollektor nach einem der vorangehenden Ansprüche, wobei die Absorberplatte und/oder die Rückplatte eine oder mehrere profilierte Metallplatten umfassen.

8. Durchlässiger Sonnenkollektor nach einem der vorangehenden Ansprüche, wobei die Rückplatte aus einem oder mehreren isolierten Kompositprofilplatten geformt ist.

9. Durchlässiges Sonnenkollektorsystem, umfassend einen durchlässigen Sonnenkollektor nach einem der vorangehenden Ansprüche, einen mit dem Luftauslass des durchlässigen Sonnenkollektors verbundenen Kanal und mit dem Kanal verbundene Mittel, um im Kanal und im Kollektorraum einen Unterdruck bereitzustellen, wobei der Luftauslass entlang mindestens eines Teils der Länge einer Seite des durchlässigen Sonnenkollektors bereitgestellt ist.

10. Durchlässiges Sonnenkollektorsystem nach Anspruch 9, wobei der Luftauslass an einer Seite des durchlässigen Sonnenkollektors am Ende der Rinnen mit der größten Querschnittfläche bereitgestellt ist.

11. Durchlässiges Sonnenkollektorsystem nach Anspruch 9 oder 10, wobei ein Verbindungskanal bereitgestellt ist, um mindestens zwei durchlässige Sonnenkollektoren mit dem Kanal zu verbinden.

## Revendications

1. Mur solaire à perforations (1) comprenant une plaque absorbante (2) dotée de multiples perforations (3) et une plaque arrière (4), dans lequel la plaque absorbante (2) et la plaque arrière (4) définissent un espace collecteur (5), dans lequel l'air extérieur entre dans l'espace collecteur (5) à travers les perforations (3) et dans lequel l'espace collecteur (5) est doté d'au moins une évacuation d'air, **caractérisé en ce que** à la fois la plaque absorbante (2) et la plaque arrière (4) sont profilées, dans lequel le profil comprend un ou plusieurs creux (6, 8) et crêtes (7, 9) et dans lequel la direction longitudinale des creux (6, 8) et crêtes (7, 9) à la fois de la plaque absorbante (2) et de la plaque arrière (4) est en angle par rapport à la direction globale du flux d'air dans l'espace collecteur (5) et dans lequel les directions longitudinales des creux (6, 8) et des crêtes (7, 9) de la plaque absorbante (2) et de la plaque arrière (4) s'étendent en parallèle les unes aux autres.

2. Mur solaire à perforations selon la revendication 1, dans lequel le profil d'au moins l'une de la plaque absorbante et la plaque arrière est rectangulaire ou trapézoïdale en coupe transversale.

3. Mur solaire à perforations selon la revendication 1 ou 2, dans lequel la distance entre des creux successifs (7, 9) est différente pour la plaque absorbante (2) et la plaque arrière (4).

4. Mur solaire à perforations selon l'une quelconque des revendications précédentes, dans lequel la longueur d'un creux est de préférence dans la plage de 2 à 12 mètres, plus préférablement dans la plage de 4 à 9 mètres.

5. Mur solaire à perforations selon l'une quelconque des revendications précédentes, dans lequel le ratio entre la profondeur des creux de la plaque absorbante et la profondeur des creux de la plaque arrière est dans la plage de 1:1 à 1:3, de préférence 1:1 à 1:2.

6. Mur solaire à perforations selon l'une quelconque des revendications précédentes, dans lequel la plaque absorbante et la plaque arrière sont montées l'une contre l'autre.

7. Mur solaire à perforations selon l'une quelconque des revendications précédentes, dans lequel la plaque absorbante et/ou la plaque arrière comprennent un ou plusieurs panneaux métallique profilés.

8. Mur solaire à perforations selon l'une quelconque des revendications précédentes, dans lequel la plaque arrière est formée par un ou plusieurs panneaux profilés composites isolés.

9. Système de mur solaire à perforations comprenant un mur solaire à perforations selon l'une quelconque des revendications précédentes, un conduit connecté à l'évacuation d'air du mur solaire à perforations et un moyen connecté au conduit pour délivrer une pression négative dans le conduit et l'espace collecteur, dans lequel l'évacuation d'air est prévue le long d'au moins une partie de la longueur d'un côté du mur solaire à perforations.

10. Système de mur solaire à perforations selon la revendication 9, dans lequel l'évacuation d'air est prévue au niveau d'un côté du mur solaire à perforations au niveau de l'extrémité des creux ayant la plus grande superficie en coupe transversale.

11. Système de mur solaire à perforations selon la revendication 9 ou 10, dans lequel un canal de connexion est prévu pour connecter au moins deux murs solaires à perforations au conduit.
